# EUROPÄISCHE PATENTANMELDUNG

(11) **EP 0 864 603 A2**
(43) Veröffentlichungstag der Anmeldung: **16.09.1998**
(21) Anmeldenummer: 98102670.1
(22) Anmeldetag: 17.02.1998
(51) Int. Cl.: C08K 5/21, C08L 61/28

(54) **Wässerige Holzwerkstoff-Bindemittel**

(30) Priorität: 10.03.1997 DE 19709696
(71) Anmelder: BASF AKTIENGESELLSCHAFT, 67056 Ludwigshafen (DE)
(72) Erfinder: Wittmann, Otto, 67227 Frankenthal (DE); Kummer, Matthias, Dr., 67273 Weisenheim (DE); Schatz, Hermann, 67435 Neustadt (DE)

(57) **Zusammenfassung**

Wässerige Lösungen, enthaltend Harnstoff und mit Methanol veretherte Melamin-Formaldehyd-Harze (MMF-Harze) mit Gruppen der Formel 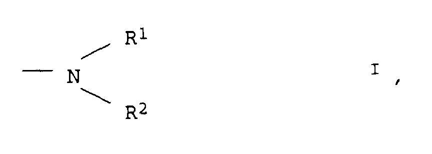 wobei R¹ und R² Wasserstoff oder ein Rest der Formel -CH₂-O-A bedeutet, in dem A für Wasserstoff oder eine Methylgruppe steht, mit der Maßgabe, daß
- das Verhältnis, gebildet aus der Summe der -NH₂-Gruppen des Harnstoffs und den Gruppen der Formel I einerseits und der Summe der Reste der Formel -CH₂-O-A andererseits 0,24:1 bis 0,45:1,
- das Verhältnis gebildet aus der Summe der Reste, in der A für Wasserstoff steht, und der Summe der Reste, in der A für eine Methylgruppe steht, 0,2:1 bis 1:1 und
- das Mol-Verhältnis Harnstoff zu Verbindungen der Formel I 2:1 bis 6:1 beträgt.

## Beschreibung

Die vorliegende Erfindung betrifft wässerige Lösungen, enthaltend Harnstoff und mit Methanol veretherte Melamin-Formaldehyd-Harze (MMF-Harze) mit Gruppen der Formel 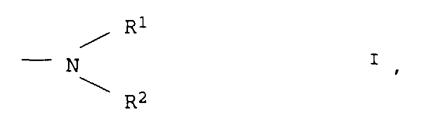 wobei R¹ und R² Wasserstoff oder ein Rest der Formel -CH₂-O-A bedeutet, in dem A für Wasserstoff oder eine Methylgruppe steht, mit der Maßgabe, daß
- das Verhältnis, gebildet aus der Summe der -NH₂-Gruppen des Harnstoffs und den Gruppen der Formel I einerseits und der Summe der Reste der Formel -CH₂-O-A andererseits 0,24:1 bis 0,45:1,
- das Verhältnis gebildet aus der Summe der Reste in der A für Wasserstoff steht, und der Summe der Reste, in der A für eine Methylgruppe steht, 0,2:1 bis 1:1 und
- das Mol-Verhältnis Harnstoff zu Verbindungen der Formel I 2:1 bis 6:1 beträgt.

Weiterhin betrifft die Erfindung die Verwendung dieser Lösungen zur Herstellung von Holzwerkstoffen.

Wässerige Aminoplastharze aus Harnstoff, Melamin und Formaldehyd sind allgemein bekannt und eignen sich für die Herstellung Spanplatten (s. Ullmanns Encyklopädie der technischen Chemie, 4. Auflage, Band 7, S. 403 bis 423).

Bei der Herstellung von Leimharzen für die Faser- und Spanplattenindustrie gibt es seit Jahrzehnten Bestrebungen, den Formaldehydgehalt in den Harzen abzusenken, um die Formaldehydemission während der Herstellung und nachträglich aus den Platten zu vermindern. Basierend auf der Chemikalien-Verbotsverordnung § 1, Abschnitt 3, werden in der Richtlinie über die Klassifizierung und Überwachung von Holzwerkstoffplatten bezüglich der Formaldehydabgabe Grenzwerte festgelegt. Für Spanplatten beträgt dieser Grenzwert 0,1 ppm Ausgleichskonzentration oder nach der Perforatormethode (DIN EN 120) ≤ 6,5 mg F/100 g Platte, für MDF (mitteldichte Faserplatten) wurde ein Wert von 7,0 mg F/100 g Platte festgelegt. Der Wunsch nach noch formaldehydärmeren Platten wird in den Vergabebedingungen für das Umweltzeichen "Blauer Engel" RAL-UZ 76 deutlich. Danach wird der Emissionsgrenzwert nochmal auf 0,05 ppm Ausgleichskonzentration halbiert. Nach der Perforatormethode entspricht dieser Grenzwert etwa 2 - 2,5 mg F/100 g Platte. Daneben gibt es Bestrebungen, Platten mit einer noch weiter reduzierten Formaldehydemission herzustellen, die ein Emissionsverhalten - wie gewachsenes Holz - aufweisen.

Selbstverständlich wird von der Holzwerkstoff-verarbeitenden Industrie erwartet, daß die Holzwerkstoffe mit reduzierter Formaldehyd-Emission auch, was die sonstigen anwendungstechnischen Eigenschaften, wie hohe Zugfestigkeit und gute Wasser- und Feuchtigkeitsbeständigkeit, betrifft, ein hohes Niveau aufweisen.

Aus der US-A-4 536 245 sind Harze aus Melamin (M), Harnstoff (U) und Formaldehyd (F). Diese Harze weisen ein besonders niedriges Verhältnis von F zu U-Äquivalenten (ein U-Äquivalent entspricht 2 NH₂-Gruppen, bei den U-Äquivalenten sind auch die NH₂-Gruppen des Melamins berücksichtigt) von bis zu 0,7:1 auf.

Die EP-A-62 389 beschreibt ebenfalls Harze, die die Herstellung von Spanplatten mit geringer Formaldehyd-Emission ermöglichen. Bei diesen Harzen beträgt das empfohlene Verhältnis F:NH₂ 0,5:1 bis 0,75:1 bei einem Melamingehalt von 1 bis 10 Gew.-%, bezogen auf den Feststoffgehalt.

Zwar ist die Formaldehyd-Emission damit hergestellter Holzwerkstoffe gegenüber Standardprodukten beachtlich reduziert, sie genügen jedoch noch nicht erhöhten Anforderungen.

Es ist zwar unter Fachleuten allgemein bekannt, daß sich die Formaldehyd-Emission von Spanplatten noch weiter reduzieren laßt, wenn man den Formaldehyd-Anteil der Aminoplastharze, aus denen diese hergestellt sind, weiter reduziert, jedoch weisen derartige Harze eine unzureichende Lagerstabilität auf. Schon nach Wenigen Tagen nach ihrer Herstellung sinkt die Reaktivität der Harze ab. Dies ist für Spanplattenhersteller inakzeptabel, da Späne, die mit diesen Harzen beleimt sind, beim Verpressen zu Platten entsprechend länger in den Pressen verweilen müssen.

Aufgabe der vorliegenden Erfindung war es deshalb, Aminoplastharze bereitzustellen, die eine gute Lagerstabilität aufweisen und mit denen sich Holzwerkstoffe herstellen lassen, die gute Gebrauchseigenschaften wie hohe Zugfestigkeit und gute Beständigkeit gegen Feuchtigkeit und Wasser aufweisen, vor allem jedoch nur geringe Mengen Formaldehyd emittieren.

Demgemäß wurden die eingangs definierten wässerigen Lösungen gefunden.

Die erfindungsgemäßen wässerigen Lösungen enthalten im allgemeinen zu 50 bis 66, bevorzugt zu 52 bis 62 Gew.-%, bezogen auf den Feststoffgehalt der Harnstoff enthaltenden und mit Methanol veretherte Melamin-Formaldehyd-Harze (MMF-Harze) mit Gruppen der Formel 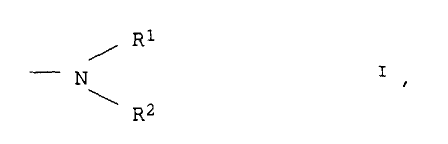 wobei R¹ und R² Wasserstoff oder ein Rest der Formel -CH₂-O-A bedeutet, in dem A für Wasserstoff oder eine Methylgruppe steht, mit der Maßgabe, daß
- das Verhältnis, gebildet aus der Summe der -NH₂-Gruppen des Harnstoffs und den Gruppen der Formel I einerseits und der Summe der Reste der Formel CH₂-O-A andererseits 0,24:1 bis 0,45:1, bevorzugt 0,28:1 bis 0,32:1
- das Verhältnis gebildet aus der Summe der Reste in der A für Wasserstoff steht, und der Summe der Reste, in der A für eine Methylgruppe steht, 0,2:1 bis 1:1, bevorzugt 0,3:1 bis 0,7:1 und
- das Mol-Verhältnis Harnstoff zu Verbindungen der Formel I 2:1 bis 6:1, bevorzugt 3:1 bis 5:1 beträgt.

Die MMF-Harze sind weitgehend so aufgebaut, daß in einem MMF-Harz-Molekül nur eine von Melamin abgeleitete Struktureinheit vorliegt. Derartige MMF-Harze weisen im allgemeinen als 70 gew.-%ige wässerige Lösung bei 20°C und einer Schergeschwindigkeit von 100 s⁻¹ eine Viskosität von 200 bis 800 mPa·s auf. Der Anteil an MMF-Harz-Molekülen mit 2 und mehr von Melamin abgeleiteten Struktureinheiten beträgt bevorzugt nicht mehr als 40 Gew.-%.

Solche MMF-Harze sind handelsüblich und deren Herstellung ist beispielsweise in der DE-A-28 39 713 beschrieben.

Die erfindungsgemäßen wässerigen Lösungen werden aus diesen MMF-Harzen im allgemeinen durch Zugabe von festem Harnstoff oder wässerigen Harnstofflösungen hergestellt.

In gebrauchsfähiger Form weisen diese wässerigen Lösungen eine Viskosität von 15 bis 150 mPa·s, gemessen bei 20°C und einer Schergeschwindigkeit von 100 s⁻¹ auf.

Die erfindungsgemäßen wässerigen Lösungen werden vorzugsweise auf einem pH-Wert von 8 bis 10, bevorzugt von 8,5 bis 9,5, eingestellt. Zur Einstellung des pH-Wertes können die allgemein üblichen Basen wie Alkali- oder Erdalkalihydroxide, bevorzugt in Form ihrer wäßrigen Lösungen, tertiäre Amine, z.B. Tri-(C₁- bis C₆-Alkyl)-amine wie Tributylamin und Triethylamin sowie tertiäre C₁- bis C₆-Alkanolamine, z.B. Triethanolamin, Methyldiethanolamin verwendet werden.

Die Lösungen können gegebenenfalls mit weiteren gebräuchlichen Hilfs- und Zusatzstoffen abgemischt werden.

Zu ihrer Stabilisierung und zur Verbesserung der mechanischen Eigenschaften der mit den Aminoplastharzen hergestellten Holzwerkstoffe können den Aminoplastharzen Polyalkohole, Zucker und wasserlösliche Polymere, aufgebaut aus Monomeren wie Acrylamid, Ethylenoxid, N-Vinylpyrrolidon, Vinylacetat oder copolymerisierbaren Mischungen dieser Monomeren zugesetzt werden.

Die Reaktivität der Harzlösungen beim Aushärten kann dadurch erhöht werden, daß ihnen zusätzlich ein Härter in Mengen von 0,1 bis 5 Gew.-%, bezogen auf ihren Feststoffgehalt, zugefügt wird. Geeignete Härter sind Ammoniumsalze wie Ammoniumchlorid, Ammoniumsulfat, Ammoniumnitrat, Ammoniumphosphate, starke Carbonsäuren wie Ameisensäure und Oxalsäure, Mineralsäuren wie Schwefelsäure sowie p-Toluolsulfonsäure.

Weiterhin können den Harzlösungen Schädlingsbekämpfungsmittel, z.B. handelsübliche Insektizide oder Fungizide beigemischt werden.

Die Harzlösungen eignen sich besonders als Bindemittel zur Herstellung von plattenförmigen Holzwerkstoffen wie Holzfaserplatten und Holzspanplatten (vgl. Ullmanns Enzyklopädie der technischen Chemie, 4. Auflage, 1976, Band 12, S. 709 bis 727) aus zerkleinertem Holz.

Die Herstellung der Holzwerkstoffe erfolgt nach den auf diesem Fachgebiet allgemein bekannten Methoden (vgl. Ullmanns Enzyklopädie der technischen Chemie, 4. Auflage, Band 12, S. 709 bis 726). Die Verleimung erfolgt günstigerweise, indem man das mit der erfindungsgemäßen wässerigen Lösung versehene zerkleinerte Holz bei Temperaturen von 120 bis 250°C verpreßt. Unter diesen Bedingungen härtet das Harz rasch aus, und man erhält Holzwerkstoffe mit guten mechanischen Eigenschaften, die weitgehend unempfindlich gegenüber Feuchtigkeitseinflüssen sind und deren Formaldehydemission in der Größenordnung von gewachsenem Holz liegt.

### Abkürzungen

- Tle: = Teile
- F: = Formaldehyd
- M: = Melamin
- U: = Harnstoff
- MUF-Harz: = Aminoplastharz aus M, F und U
- MMF-Harz: = mit Methanol verethertes Melamin-Formaldehyd-Harz
- u: = Holzfeuchtigkeit in % bezogen auf atro (absolut trockenes) Holz

### Beispiele

A. Harzherstellung
   Beispiel 1
      3,38 kg einer 39%igen wäßrigen Formaldehydlösung wurden in ein Reaktionsgefäß vorgelegt und mit wäßriger Natronlauge auf einen pH-Wert von 8,6 eingestellt. Nach einer Zugabe von 1,5 kg Melamin wurde auf ca. 88°C aufgeheizt, bis eine klare Lösung entstand. Vor der Zugabe von 6,8 l Methanol wurde auf ca. 65°C abgekühlt und die Reaktionslosung mit Säure auf pH 4,5 eingestellt. Für die Veretherungsreaktion betrug die Zeit ca. 40 Minuten. Die Temperatur während dieser Reaktion lag unter Rühren bei 48°C.
      Nach einer pH-Korrektur mit NaOH auf ca. 7,5 wurde das überschüssige Methanol destillativ entfernt. Die Wasserverträglichkeit der auf ca. 40°C abgekühlten Reaktionslösung betrug 1 : unendlich.
      Zu 4,2 kg der auf Raumtemperatur abgekühlten Reaktionslösung wurden 2,4 kg Wasser und 2,9 kg Harnstoff zugesetzt. Es entstand ein wasserklares Harz für Holzwerkstoffe mit einem Feststoffgehalt von ca. 52 % und einer Lagerbarkeit von mehr als 6 Wochen.
   Beispiel 2
      2,68 kg einer 40%igen Formaldehydlösung wurden in ein Reaktionsgefäß vorgelegt mit 1,5 kg Melamin vorkondensiert und wie im Beispiel 3 mit NaOH auf einen pH-Wert von 8,6 eingestellt. Nach Kondensation und Veretherung wie im Beispiel 1 wurde zur abgekühlten Reaktionslösung (ca. 3,6 kg) 1,8 kg Wasser und 2,2 kg Harnstoff (fest) zugesetzt. Die Harzlösung war klar und enthielt 53 % Trockenrückstand.
      Das Verhältnis FA : NH₂-Gruppen beträgt 0,30.
   Beispiel 3 (Zum Vergleich)
      5,0 kg Formaldehydlösung (40%ig) wurden mit 0,9 kg Wasser in ein Reaktionsgefäß vorgelegt und mit Natronlauge auf einen pH-Wert von 9 eingestellt. Anschließend wurden 2,4 kg Melamin zugesetzt und unter Rühren auf ca. 90°C aufgeheizt. Nach ca. 40 Minuten entstand eine klare Lösung, die man nach weiteren 10 Minuten Rühren auf ca. 50°C abkühlte. Der pH-Wert wurde nun auf 8,5 - 8,8 eingestellt. Danach wurden stufenweise 4,5 kg Harnstoff (fest oder als Lösung) zugesetzt bis sich ein Molverhältnis F : NH₂-Gruppen von ca. 0,32 einstellte. Die Harzlösung wurde rasch auf Raumtemperatur gekühlt. Der Feststoffgehalt (2 Stunden bei 120°C trocken) lag bei 60 - 65 %.
B. Prüfung der Harze
   - Lagerbarkeit:: Bildung von Trübungen und Niederschlägen
   - Reaktivität:: Gelierzeit mit 3,5 % Härter (34 %ige Ameisensäure)
C. Holzwerkstoffherstellung
   5,4 kg Holzspäne (u = 1-2 %) - vorwiegend aus Fichten und Kieferholz - wurden in einem Beleimungsmischer mit 943 g einer Harzlösung 1 beleimt. Zur Hydrophobierung werden 0,5 % Paraffin bezogen auf atro Holz entweder in geschmolzenem Zustand oder als wäßrige Dispersion aufgetragen.
   - Harzlösung 1:: 914 Tle Harzmischung gemäß Beispiel 1 29 Tle einer 34 %igen wäßrigen Lösung von Ameisensäure
   Die beleimten Späne (u ca. 11 %) werden zu einer Matte geformt und in einer Heizpresse bei 190°C zu einer 18 mm dicken Platte und einem spezifischen Gewicht von 680 kg/m³ verdichtet.
   Platten aus den Harzmischungen gemäß Beispiel 2 und 3 wurden in analoger Weise hergestellt.
D. Prüfung der Holzwerkstoffe
   Die mechanischen Prüfungen werden gemäß DIN EN 310-323 durchgeführt. Die Emissionsmessungen erfolgten nach DIN EN 717-1 Kammer-Methode und nach DIN EN 120 Perforator-Methode.
   Die Prüfungsergebnisse sind Tabelle 1 zu entnehmen.

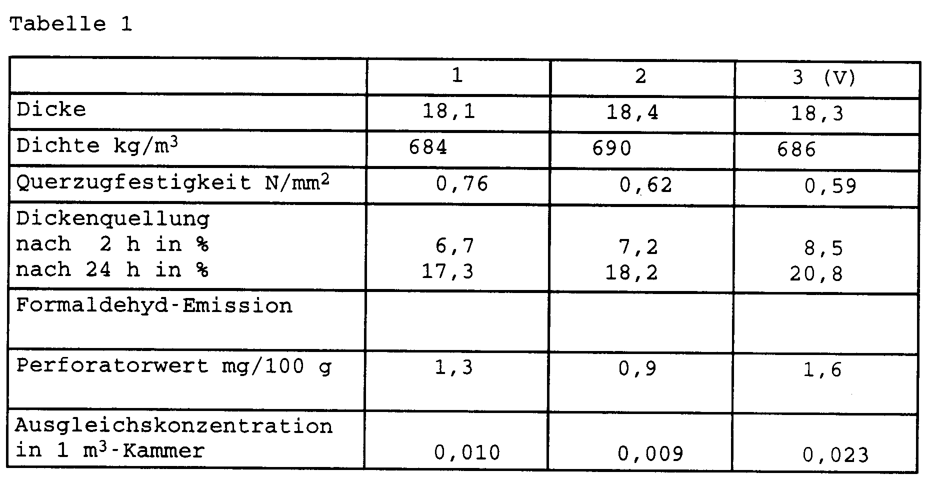

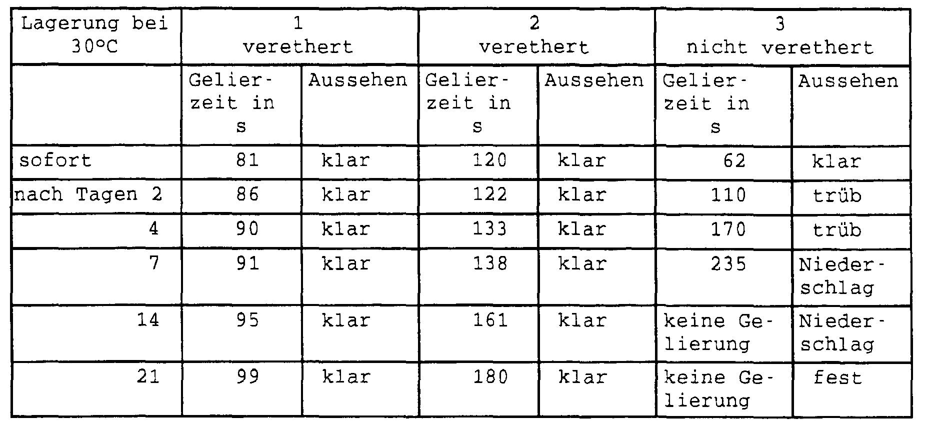

Die Beispiele 1 - 3 bestätigen, daß durch eine Veretherung oder Teilveretherung der N-Methylolgruppen des Melaminformaldehydharzes sehr lagerstabile MMF-Harzmischungen herstellbar sind. Selbst nach 21 Tagen bleiben die Mischungen klar und ausreichend reaktiv. Konventionell hergestellte, nicht veretherte Harzmischungen weisen bei Raumtemperatur bereits nach 7 Tagen Lagerung einen Niederschlag auf.

Die erfindungsgemäßen Harzlösungen eignen sich besonders für die Herstellung von plattenförmigen Holzwerkstoffen. Ihre hohe Reaktivität gestattet es, extrem niedrige Molverhältnisse F : NH₂ anzusetzen, ohne unzumutbare Verlängerung der Preßzeiten.

Die Ergebnisse der Plattenprüfung bestätigen, daß sich Formaldehydemissionswerte "wie gewachsenes Holz" erreichten lassen. Im WKI-Kurzbericht Nr. 14/1996 (Wilhelm Klauditz Institut Braunschweig, Bienroder Weg 54E) wird publiziert, daß reines, nicht verleimtes - also "gewachsenes Holz" - Emissionswerte in der 1 cbm-Prüfkammer von 0,01 ppm Formaldehyd ergibt.

## Patentansprüche

1. Wässerige Lösungen, enthaltend Harnstoff und mit Methanol veretherte Melamin-Formaldehyd-Harze (MMF-Harze) mit Gruppen der Formel 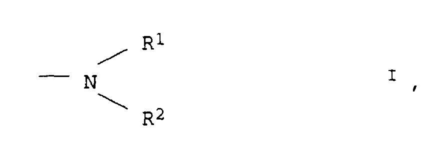 wobei R¹ und R² Wasserstoff oder ein Rest der Formel -CH₂-O-A bedeutet, in dem A für Wasserstoff oder eine Methylgruppe steht, mit der Maßgabe, daß
- das Verhältnis, gebildet aus der Summe der -NH₂-Gruppen des Harnstoffs und den Gruppen der Formel I einerseits und der Summe der Reste der Formel -CH₂-O-A andererseits 0,24:1 bis 0,45:1,
- das Verhältnis gebildet aus der Summe der Reste, in der A für Wasserstoff steht, und der Summe der Reste, in der A für eine Methylgruppe steht, 0,2:1 bis 1:1 und
- das Mol-Verhältnis Harnstoff zu Verbindungen der Formel I 2:1 bis 6:1 beträgt.

2. Wässerige Lösungen nach Anspruch 1, enthaltend MMF-Harze, die als 70 %ige wässerige Lösung eine Viskosität von 200 bis 800 mPa·s, gemessen bei 20°C und einer Schergeschwingigkeit von 100 s⁻¹ aufweisen.

3. Verwendung der wässerigen Lösungen nach Anspruch 1 oder 2 als Bindemittel für die Herstellung von Holzwerkstoffen.

4. Holzwerkstoffe, erhältlich unter Verwendung der wässerigen Lösungen nach Anspruch 1 oder 2.
